# FASCICULE DE BREVET EUROPEEN

(11) **EP 3 704 888 B1**
(45) Date de publication et mention de la délivrance du brevet: **05.01.2022**
(21) Numéro de dépôt: 18793671.1
(22) Date de dépôt: 29.10.2018
(51) Int. Cl.: H04W 24/02, H04W 84/12

(54) **PROCÉDÉ DE SÉLECTION DE CANAL PRIMAIRE POUR DES COMMUNICATIONS SANS FIL**
VERFAHREN ZUR PRIMÄRKANALAUSWAHL FÜR DRAHTLOSE KOMMUNIKATION
PRIMARY CHANNEL SELECTION METHOD FOR WIRELESS COMMUNICATIONS

(30) Priorité: 31.10.2017 FR 1760262
(43) Date de publication de la demande: 09.09.2020
(73) Titulaire: Sagemcom Broadband SAS, 92500 Rueil-Malmaison (FR)
(72) Inventeur: REUCHE, Anthony, 92500 Rueil Malmaison (FR); LALAM, Massinissa, 92500 Rueil Malmaison (FR)
(74) Mandataire: Cabinet Le Guen Maillet
(86) Numéro de dépôt international: PCT/EP2018/079589
(87) Numéro de publication internationale: WO 2019/086386

(56) Documents cités:
- EP-A1- 3 026 975
- US-A1- 2012 057 534

## Description

La présente invention concerne un procédé de sélection de canal primaire dans le cadre de communications de type CSMA/CA (« Carrier Sense Multiple Access with Collision Avoidance » en anglais, ou « Écoute d'un Support à Accès Multiple avec Evitement de Collision » en français) dans un réseau local sans-fil.

La mise en place de réseaux locaux sans-fil WLAN (« Wireless Local Area Network » en anglais) offre une grande flexibilité aux utilisateurs de dispositifs de communication nomades, tels que des ordinateurs, des tablettes, des téléphones intelligents, etc. De tels réseaux WLAN sont établis par des points d'accès AP (« Access Point » en anglais). De tels réseaux locaux sans-fil WLAN permettent ainsi de faciliter l'interconnexion de dispositifs au sein d'une habitation, d'un bureau, en apportant une connectivité locale sans-fil afin d'éviter d'avoir recours à un câblage d'interconnexion.

De tels points d'accès AP peuvent être intégrés dans des passerelles résidentielles RGW (« Residential GateWay » en anglais) mises à disposition par des opérateurs de télécommunications à des utilisateurs leur ayant souscrit un abonnement. Ainsi, outre la connectivité locale apportée par ces réseaux WLAN, ces utilisateurs peuvent également accéder à des services de réseaux étendus WAN (« Wide Area Network » en anglais), comme par exemple Internet, par le biais de ces points d'accès.

Dans un réseau local sans-fil WLAN, un canal de communication véhicule des informations de contrôle et de gestion dudit réseau local sans-fil WLAN. Ce canal est appelé *canal primaire,* et sert généralement à transmettre des balises (« beacon » en anglais) identifiant le réseau local sans-fil WLAN permettant notamment à des terminaux sans-fil, appelés *stations,* de se synchroniser avec le point d'accès gérant le réseau local sans-fil WLAN. C'est grâce à ce canal primaire que s'effectuent des opérations essentielles de découverte du réseau, d'association, etc. Un ou plusieurs canaux complémentaires, appelés *canaux secondaires,* permettent quant à eux d'augmenter le débit de transmission.

Le choix de ce canal primaire étant critique au fonctionnement d'un réseau local sans-fil WLAN en présence d'interférences, l'état de la technique établit que des points d'accès qui gèrent des réseaux locaux sans-fil WLAN qui interfèrent vont chercher à rendre leurs canaux primaires orthogonaux entre eux.

Considérons l'exemple d'un réseau local sans-fil WLAN de type Wi-Fi, où le canal primaire couvre une bande de 20 MHz. Des canaux secondaires sont typiquement définis pour permettre un plus grand débit de transmission, notamment dans la bande fréquentielle à 5 GHz. Considérons donc un réseau Wi-Fi R1 compatible avec le standard IEEE 802.11ac de 80MHz de large, avec un canal primaire C1 de 20 MHz de large, un canal secondaire C2 de 20 MHz de large, et pour un agrégat de canaux secondaires [C3-C4] de 40MHz de large. Considérons aussi un autre réseau Wi-Fi R2 compatible avec le standard IEEE 802.11ac, dont la couverture chevauche celle du réseau Wi-Fi R1. Le point d'accès du réseau Wi-Fi R2 choisit son canal primaire de sorte à éviter C1 et également C2, dans la mesure où ledit point d'accès suit la procédure définie au paragraphe §10.39.2 dans l'amendement IEEE 802.11ac-2013, ne laissant que C3 ou C4 à disposition. Ceci est fait de sorte qu'en cas de détection d'interférence mutuelle des réseaux Wi-Fi R1 et R2, si lesdits réseaux utilisent des transmissions à bande dynamique, les deux réseaux Wi-Fi R1 et R2 puissent se replier sur des transmissions de 40 MHz de large (C1-C2 et C3-C4) et ne plus s'interférer (mécanisme de repli). Une transmission à bande dynamique en Wi-Fi ne peut se faire, pour le réseau Wi-Fi R1 par exemple, que sur C1, sur C1+C2 ou sur C1+C2+C3+C4, et pas d'autres combinaisons possibles supportées dans le standard.

Dans les réseaux locaux sans-fil WLAN, notamment de type Wi-Fi, l'accès au médium se fait par une procédure de type CSMA/CA. Ainsi, lorsqu'un dispositif veut effectuer une transmission, ledit dispositif détermine à un instant donné si le médium est libre (transmission possible) ou occupé (transmission à différer). Cette approche repose sur deux procédures :
- une détection d'énergie : le médium est considéré comme libre si la puissance mesurée sur une certaine bande fréquentielle et pendant un certain temps est inférieure à un premier seuil prédéfini (*e.g*. -62dBm mesuré sur 20 MHz de bande). Cette détection d'énergie n'est pas liée à une technologie spécifique de transmission.
- une détection de préambule : le médium est considéré comme libre si aucun signal significatif, compatible avec la technologie WLAN utilisée, n'est détecté sur une certaine bande pendant un certain temps. Un second seuil prédéfini est utilisé pour ce faire. Dans le standard IEEE 802.11 (standard servant de base aux équipements certifiés Wi-Fi), il est requis qu'un signal IEEE 802.11 (de type a/b/g/n/ac/ax) encodé avec le schéma de modulation et de codage le plus robuste utilisé dans le préambule soit détectable et décodable par un autre équipement IEEE 802.11 si la puissance à laquelle il est reçu est supérieure à -82 dBm mesuré sur 20 MHz de bande (seuil de sensibilité). Décoder le préambule spécifié par le standard IEEE 802.11 permet en effet de déterminer la longueur de la trame qui contient ce préambule et donc le temps pendant lequel le médium est considéré occupé par ladite trame. Cette détection de préambule est donc liée à la technologie de transmission utilisée.

Pour que le canal primaire d'un réseau local sans-fil WLAN soit considéré comme libre, il faut que les deux procédures ci-dessus, qui s'appliquent au niveau de la couche physique, indiquent que le médium est libre. Cependant, afin de faciliter les transmissions sur des canaux agrégés, seule la procédure de détection d'énergie est requise sur les canaux secondaires.

Des procédures de réservation du média RTS/CTS (« Request to Send / Clear to Send » en anglais) peuvent être implémentées afin de signaler sur tous les canaux (primaire et secondaire(s)) qu'une transmission ayant une durée indiquée va avoir lieu. Toutefois, ces procédures sont parfois inadaptées à la nature des flux de données transmis. En particulier, les trafics sensibles au temps-réel, reposant par exemple sur le protocole UDP (« User Datagram Protocol » en anglais), ne peuvent se permettre de retarder leurs transmissions avec ces procédures, afin de ne pas dégrader l'expérience utilisateur.

Ainsi, il existe des situations dans lesquelles un premier point d'accès AP dégrade des transmissions de données sensibles au temps-réel effectuées par un second point d'accès AP, parce que le premier point d'accès AP n'implémente que la détection d'énergie sur son ou ses canaux secondaires, un dit canal secondaire correspondant au canal primaire du second point d'accès AP.

Les communications dans les réseaux locaux sans-fil WLAN peuvent donc se perturber entre elles quand elles s'opèrent sur une même bande fréquentielle tout en étant sur des canaux primaires distincts. Cette situation est d'autant plus dommageable lorsqu'un ou plusieurs équipements perturbateurs implémentent des transmissions par rafale (« burst » en anglais) qui ne permettent pas à des mécanismes de repli (« back-off » en anglais) d'équilibrer le partage de l'accès au médium. En effet, de tels équipements perturbateurs peuvent ne pas se rendre compte que leurs transmissions génèrent des perturbations, et comme les transmissions par rafale monopolisent le médium, cela peut engendrer des problématiques de dégradation de qualité perçue pour des services sensibles à l'aspect temps réel (e.g. IPTV, VoIP ...). Ce phénomène est de plus amplifié quand les procédures susmentionnées de réservation du média de type RTS/CTS ne sont pas implémentées par le ou les équipements perturbateurs, et/ou quand les mécanismes de repli ne sont pas implémentés par le ou les équipements perturbateurs eux-mêmes.

Il est connu le document US 2012/057534 A1, qui divulgue un mécanisme d'affectation de canaux entre un premier réseau sans-fil et un second réseau sans fil à proximité du premier réseau sans-fil.

Il est souhaitable de pallier ces inconvénients de l'état de la technique. Il est ainsi souhaitable de fournir une solution qui permette de renforcer la qualité de transmission de données sensibles au temps-réel dans des réseaux locaux sans-fil WLAN tels qu'évoqués précédemment.

A cet effet, l'invention concerne un procédé de sélection de canal primaire de communication dans un système de communication sans-fil comportant un premier point d'accès gérant un premier réseau local sans-fil et au moins un second point d'accès gérant au moins un second réseau local sans-fil respectif, les transmissions dans les premier et second(s) réseaux locaux sans-fil étant effectuées selon une procédure de type CSMA/CA, chaque point d'accès parmi les premier et second(s) points d'accès implémentant un mécanisme de détection d'énergie et un mécanisme de détection de préambule dans le cadre de la procédure CSMA/CA, le mécanisme de détection d'énergie étant implémenté pour accéder au canal primaire de communication et pour accéder à chaque canal secondaire de communication associé au canal primaire de communication, le mécanisme de détection de préambule étant implémenté pour accéder au canal primaire de communication et éventuellement pour accéder à chaque canal secondaire de communication associé au canal primaire de communication. Le procédé est tel qu'une unité de décision instruit que le premier point d'accès et chaque second point d'accès utilisent le même canal primaire de communication, lorsque le premier point d'accès communique avec une station dans le cadre d'une transmission de données sensibles au temps-réel de qualité de service supérieure ou égale à toute qualité de service de transmissions impliquant chaque second point d'accès dans son second réseau local sans-fil. Ainsi, la qualité de transmission de données sensibles au temps-réel dans le premier réseau local sans-fil est améliorée. En effet, en assurant que le même canal primaire de communication est utilisé, l'unité de décision assure que chaque second point d'accès susceptible d'interférer avec la transmission de données sensibles au temps-réel active le mécanisme de détection de préambule.

L'invention concerne également un produit programme d'ordinateur comportant des instructions pour implémenter, par un processeur, le procédé ci-dessus, lorsque ledit programme est exécuté par ledit processeur. L'invention concerne également un support de stockage d'informations stockant un programme d'ordinateur comprenant des instructions pour implémenter, par un processeur, le procédé ci-dessus, lorsque ledit programme est exécuté par ledit processeur.

Selon un mode de réalisation particulier, le procédé est tel que le premier point d'accès surveille la qualité de ladite transmission de données sensibles au temps-réel, et déclenche une procédure d'alignement de canaux primaires auprès de l'unité de décision lorsque la qualité de ladite transmission de données sensibles au temps-réel baisse en dessous d'un seuil prédéfini. Ainsi, l'alignement des canaux primaires est déclenché au besoin (perte de qualité) et le reste du temps, le système de communication peut bénéficier d'une utilisation de canaux primaires orthogonaux.

Selon un mode de réalisation particulier, le procédé est tel que, avant de déclencher la procédure d'alignement de canaux primaires auprès de l'unité de décision, le premier point d'accès effectue un repli dynamique de bande et continue de surveiller la qualité de ladite transmission de données sensibles au temps-réel. Ainsi, lorsque le repli dynamique de bande permet d'atteindre la qualité requise pour ladite transmission de données sensibles au temps-réel, le système de communication peut bénéficier d'une utilisation de canaux primaires orthogonaux.

Selon un mode de réalisation particulier, le procédé est tel que le premier point d'accès envoie à la station une demande de balayage requérant de retourner un premier rapport de balayage listant les réseaux locaux sans-fil à portée radio de ladite station, ainsi que les canaux occupés par lesdits réseaux locaux sans-fil à portée radio de ladite station, le premier point d'accès notifie le premier rapport de balayage à l'unité de décision, et l'unité de décision utilise ledit premier rapport de balayage pour déterminer quel second réseau local sans-fil ou quels seconds réseaux locaux sans-fil sont susceptibles d'interférer avec ladite transmission de données sensibles au temps-réel. Ainsi, le premier rapport de balayage permet à l'unité de décision d'identifier plus facilement quels seconds réseaux locaux sans-fil sont susceptibles d'interférer avec ladite transmission de données sensibles au temps-réel.

Selon un mode de réalisation particulier, le procédé est tel que le premier rapport de balayage fournit une information de qualité de service d'un trafic de données dominant sur chaque réseau local sans-fil à portée radio de ladite station. Ainsi, l'unité de décision n'a pas besoin d'être connectée à chaque point d'accès en charge d'un réseau local sans-fil pouvant interférer avec ladite transmission de données sensibles au temps-réel.

Selon un mode de réalisation particulier, le procédé est tel que le premier point d'accès effectue un balayage de ses canaux secondaires de communication et liste les réseaux locaux sans-fil à portée radio dudit premier point d'accès dans un second rapport de balayage, le premier point d'accès notifie le second rapport de balayage à l'unité de décision, et l'unité de décision utilise ledit second rapport de balayage pour déterminer quel second réseau local sans-fil ou quels seconds réseaux locaux sans-fil sont susceptibles d'interférer avec ladite transmission de données sensibles au temps-réel. Ainsi, le second rapport de balayage permet à l'unité de décision d'identifier plus facilement quels seconds réseaux locaux sans-fil sont susceptibles d'interférer avec ladite transmission de données sensibles au temps-réel.

Selon un mode de réalisation particulier, le procédé est tel que le second rapport de balayage fournit une information de qualité de service d'un trafic de données dominant sur chaque réseau local sans-fil à portée radio dudit premier point d'accès. Ainsi, l'unité de décision n'a pas besoin d'être connectée à chaque point d'accès en charge d'un réseau local sans-fil pouvant interférer avec ladite transmission de données sensibles au temps-réel.

Selon un mode de réalisation particulier, le procédé est tel que, lorsque l'unité de décision détermine que plusieurs seconds réseaux locaux sans-fil sont susceptibles d'interférer avec ladite transmission de données sensibles au temps-réel, l'unité de décision requiert au premier point d'accès d'effectuer une procédure de découverte itérative de canal primaire dans laquelle le premier point d'accès teste des canaux primaires de communication possibles en surveillant la qualité de ladite transmission de données sensibles au temps-réel pour déterminer quel canal primaire de communication est approprié. Ainsi, il est possible de dynamiquement découvrir quel canal primaire de communication utiliser.

Selon un mode de réalisation particulier, le procédé est tel que l'unité de décision collecte des rapports de balayage fournis par tous les points d'accès qui lui sont connectés, l'unité de décision crée une liste L de tous les seconds points d'accès qui détectent le premier point d'accès avec un niveau de puissance supérieur à un seuil prédéfini, l'unité de décision instruit tous les seconds points d'accès de la liste L d'utiliser comme canal primaire de communication le même canal que le canal primaire de communication du premier point d'accès, et à chaque changement de canal primaire de communication du premier point d'accès, le premier point d'accès informe l'unité de décision du canal primaire de communication nouvellement sélectionné, et l'unité de décision instruit tous les seconds points d'accès de la liste L d'utiliser, comme canal primaire de communication, le canal primaire de communication nouvellement sélectionné par le premier point d'accès. Ainsi, lorsque le premier réseau local sans-fil est identifié comme support régulier d'une telle transmission de données sensibles au temps-réel, l'unité de décision assure de manière rapide et efficace que chaque second point d'accès susceptible d'interférer avec ladite transmission de données sensibles au temps-réel active le mécanisme de détection de préambule.

Selon un mode de réalisation particulier, le procédé est tel que les premier et second(s) réseaux locaux sans-fil sont de type Wi-Fi.

L'invention concerne également une unité de décision configurée pour effectuer une sélection de canal primaire de communication dans un système de communication sans-fil comportant un premier point d'accès gérant un premier réseau local sans-fil et au moins un second point d'accès gérant au moins un second réseau local sans-fil respectif, les transmissions dans les premier et second(s) réseaux locaux sans-fil étant effectuées selon une procédure de type CSMA/CA, chaque point d'accès parmi les premier et second(s) points d'accès implémentant un mécanisme de détection d'énergie et un mécanisme de détection de préambule dans le cadre de la procédure CSMA/CA, le mécanisme de détection d'énergie étant implémenté pour accéder au canal primaire de communication et pour accéder à chaque canal secondaire de communication associé au canal primaire de communication, le mécanisme de détection de préambule étant implémenté pour accéder au canal primaire de communication et éventuellement pour accéder à chaque canal secondaire de communication associé au canal primaire de communication. L'unité de décision est telle qu'elle comporte des moyens pour instruire que le premier point d'accès et chaque second point d'accès utilisent le même canal primaire de communication, lorsque le premier point d'accès communique avec une station dans le cadre d'une transmission de données sensibles au temps-réel de qualité de service supérieure ou égale à toute qualité de service de transmissions impliquant chaque second point d'accès dans son second réseau local sans-fil.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1A illustre schématiquement un premier système de communication dans lequel la présente invention peut être implémentée ;
- la Fig. 1B illustre schématiquement un second système de communication dans lequel la présente invention peut être implémentée ;
- la Fig. 1C illustre schématiquement un troisième système de communication dans lequel la présente invention peut être implémentée ;
- la Fig. 1D illustre schématiquement un quatrième système de communication dans lequel la présente invention peut être implémentée ;
- la Fig. 2 illustre schématiquement un exemple d'architecture matérielle d'une unité de décision du système de communication ;
- la Fig. 3 illustre schématiquement un algorithme de décision de déclenchement d'une procédure d'alignement de canaux primaires, l'algorithme étant implémenté par un point d'accès du système de communication ;
- la Fig. 4 illustre schématiquement un algorithme de collecte de données de balayage effectué par une station du système de communication, l'algorithme étant implémenté par ledit point d'accès ;
- la Fig. 5 illustre schématiquement un algorithme de collecte de données de balayage effectué par ledit point d'accès ;
- la Fig. 6 illustre schématiquement un algorithme de décision d'alignement ou pas de canaux primaires, l'algorithme étant implémenté par ladite unité de décision ;
- la Fig. 7 illustre schématiquement un algorithme de découverte itérative de canal primaire à sélectionner, l'algorithme étant effectué par ledit point d'accès ; et
- la Fig. 8 illustre schématiquement un algorithme d'alignement de canaux primaires, l'algorithme étant effectué par ladite unité de décision, selon une autre approche de l'invention.

Il est par la suite considéré un système de communication sans-fil comportant un premier point d'accès AP1 111 gérant un premier réseau local sans-fil WLAN1 121 et au moins un second point d'accès AP2 112 gérant au moins un second réseau local sans-fil WLAN2 112 respectif. Le système de communication sans-fil est tel que les transmissions dans les premier WLAN1 121 et second(s) WLAN1 122 réseaux locaux sans-fil sont effectuées selon une procédure de type CSMA/CA. Les premier WLAN1 121 et second(s) WLAN1 122 réseaux locaux sans-fil sont préférentiellement de type Wi-Fi (ou basé sur le standard IEEE 802.11).

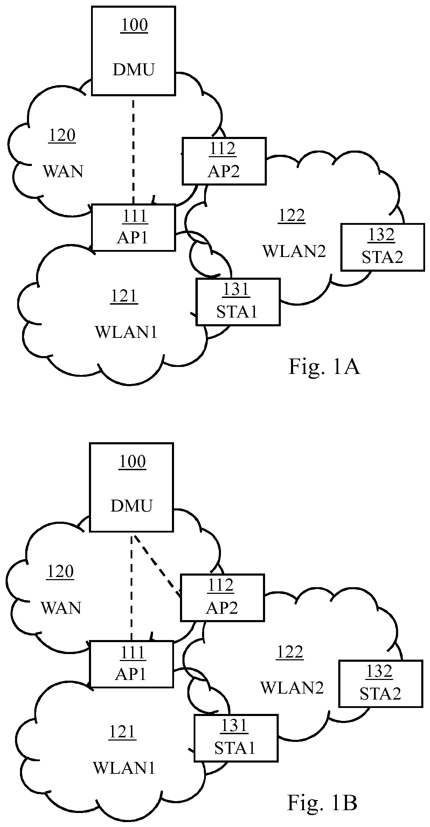

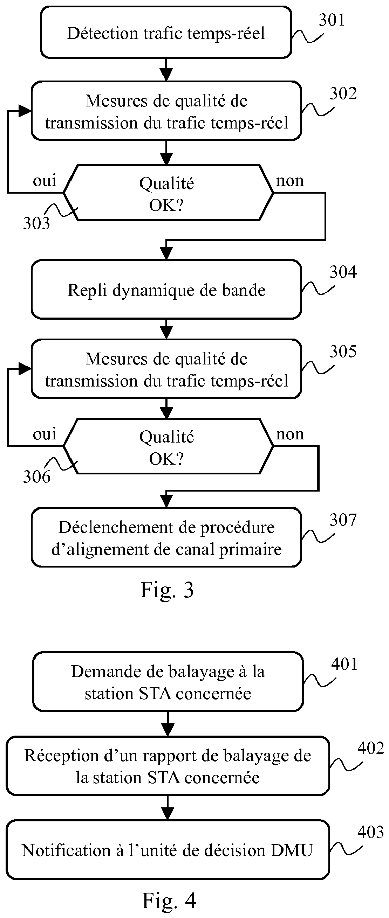

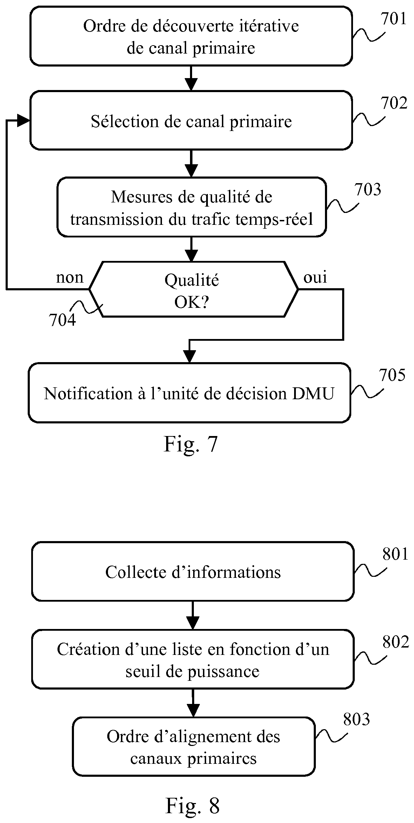

Les transmissions dans les premier WLAN1 121 et second(s) WLAN1 122 réseaux locaux utilisent la même bande fréquentielle, découpée en canaux, parmi lesquels sont sélectionnés un canal primaire et au moins un canal secondaire. Chaque point d'accès parmi les premier AP1 111 et second(s) AP2 112 points d'accès implémente un mécanisme de détection d'énergie et un mécanisme de détection de préambule (tels que mentionnés en partie introductive du présent document) dans le cadre de la procédure CSMA/CA, le mécanisme de détection d'énergie étant implémenté pour accéder au canal primaire et pour accéder à chaque canal secondaire associé au canal primaire, le mécanisme de détection de préambule étant implémenté pour accéder au canal primaire et éventuellement pour accéder à chaque canal secondaire associé au canal primaire. Le premier point d'accès AP1 111 communique avec une station STA1 131 dans le cadre d'une transmission de données sensibles au temps-réel (*e.g*. IPTV, VoIP,...). Différents agencements du système de communication sont possibles, tels que présentés ci-après en relation avec les Figs. 1A à 1D. Lorsque la qualité de service QoS (« Quality of Service » en anglais) de cette transmission de données sensibles au temps-réel est supérieure ou égale à toute qualité de service de transmissions impliquant chaque second point d'accès AP2 112 dans son second réseau local sans-fil WLAN2 122, une unité de décision DMU (« Decision Making Unit » en anglais) 100 instruit que le premier point d'accès AP1 111 et chaque second point d'accès AP2 112 utilisent le même canal primaire de communication. Divers modes de réalisation selon une première approche sont décrits ci-après en relation avec les Figs. 3 à 7, et un autre mode de réalisation selon une seconde approche est décrit ci-après en relation avec la Fig. 8.

La **Fig. 1A** illustre schématiquement un premier système de communication dans lequel la présente invention peut être implémentée. Dans ce premier système, le premier point d'accès AP1 111 et chaque second point d'accès AP2 112 sont connectés à un réseau étendu WAN (« Wide Area Network » en anglais) 120, afin de fournir un accès Internet à des stations connectées à leur réseau local sans-fil WLAN respectif. Ainsi, la station STA1 reçoit par exemple un flux audiovisuel (donc sensible au temps-réel) en provenance du réseau étendu WAN 120, via le premier point d'accès AP1 111, et une station STA2 accède à des sites web par le protocole HTTP (« HyperText Transfer Protocol » en anglais) via un dit second point d'accès AP2 112. Par exemple, la station STA1 est un décodeur STB (« Set-Top Box » en anglais) et la station STA2 est une tablette. Dans le cadre de la Fig. 1A, l'unité de décision DMU 100 est connectée uniquement au premier point d'accès AP1 111, via le réseau étendu WAN 120. A noter que l'unité de décision DMU 100 peut en variante être connectée au premier point d'accès AP1 111 via d'autres moyens qu'un réseau étendu (tel qu'Internet), par exemple, une connexion sans-fil de type Bluetooth, ou une connexion Ethernet, ou tout autre lien de communication filaire, optique ou radio.

La **Fig. 1B** illustre schématiquement un second système de communication dans lequel la présente invention peut être implémentée. Le second système de communication diffère du premier système de communication de la Fig. 1A en ce que l'unité de décision DMU 100 est en outre connectée à chaque second point d'accès AP2 112, via le réseau étendu WAN 120. A noter que l'unité de décision DMU 100 peut en variante être connectée à chaque second point d'accès AP2 112 via d'autres moyens qu'un réseau étendu, par exemple, une connexion sans-fil de type Bluetooth, ou une connexion Ethernet, ou tout autre lien de communication filaire, optique ou radio.

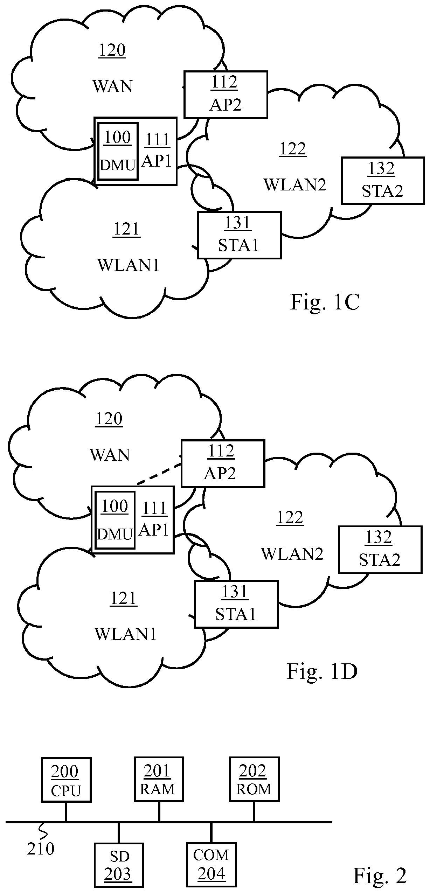

La **Fig. 1C** illustre schématiquement un troisième système de communication dans lequel la présente invention peut être implémentée. Le troisième système de communication diffère du premier système de communication de la Fig. 1A en ce que l'unité de décision DMU 100 est intégrée au premier point d'accès AP1 111.

La **Fig. 1D** illustre schématiquement un quatrième système de communication dans lequel la présente invention peut être implémentée. Le quatrième système de communication diffère du troisième système de communication de la Fig. 1C en ce que l'unité de décision DMU 100 est ici connectée à chaque second point d'accès AP2 112, via le réseau étendu WAN 120. A noter que l'unité de décision DMU 100 peut en variante être connectée à chaque second point d'accès AP2 112 via d'autres moyens qu'un réseau étendu, par exemple, une connexion sans-fil de type Bluetooth, ou une connexion Ethernet, ou tout autre lien de communication filaire, optique ou radio.

La **Fig. 2** illustre schématiquement un exemple d'architecture matérielle de l'unité de décision DMU 100. L'exemple d'architecture matérielle de la Fig. 2 est aussi applicable aux points d'accès AP1 111 et AP2 112.

L'exemple d'architecture matérielle présenté comporte, reliés par un bus de communication 210 : un processeur CPU (« Central Processing Unit» en anglais) 200 ; une mémoire vive RAM (« Random Access Memory » en anglais) 201 ; une mémoire morte ROM (« Read Only Memory » en anglais) 202 ; une unité de stockage ou un lecteur de support de stockage, tel qu'un lecteur de cartes SD (« Secure Digital » en anglais) 203 ou un disque dur HDD (« Hard Disk Drive » en anglais) ; et au moins une interface de communication COM 204.

Lorsque l'architecture matérielle représente l'unité de décision DMU 100, l'interface de communication COM 204 permet à l'unité de décision DMU 100 de communiquer avec le premier point d'accès AP1 111 et éventuellement avec chaque second point d'accès AP2 112.

Lorsque l'architecture matérielle représente le premier point d'accès AP1 111, l'interface de communication COM 204 permet au premier point d'accès AP1 111 de communiquer avec l'unité de décision DMU 100.

Lorsque l'architecture matérielle représente un dit second point d'accès AP2 112, l'interface de communication COM 204 permet éventuellement audit second point d'accès AP2 112 de communiquer avec l'unité de décision DMU 100.

Le processeur CPU 200 est capable d'exécuter des instructions chargées dans la mémoire RAM 201 à partir de la mémoire ROM 202, d'une mémoire externe (telle qu'une carte SD), d'un support de stockage (tel qu'un disque dur HDD), ou d'un réseau de communication (tel que le réseau étendu WAN 120). Lors de la mise sous tension, le processeur CPU 200 est capable de lire de la mémoire RAM 201 des instructions et de les exécuter. Ces instructions forment un programme d'ordinateur causant la mise en œuvre, par le processeur CPU 200, de tout ou partie des algorithmes et étapes décrits ci-après en relation avec le dispositif que ladite architecture matérielle représente.

Ainsi, tout ou partie des algorithmes et étapes décrits ci-après peut être implémenté sous forme logicielle par exécution d'un ensemble d'instructions par une machine programmable, telle qu'un DSP (« Digital Signal Processor » en anglais) ou un microcontrôleur ou un processeur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Ainsi, l'unité de décision DMU 100, ainsi que les points d'accès AP1 111 et AP2 112, comportent de la circuiterie électronique adaptée pour implémenter les algorithmes et étapes décrits ci-après.

A noter que les stations connectées à un desdits réseaux locaux sans-fils WLAN1 121 et WLAN2 122 peuvent suivre la même architecture matérielle.

La **Fig. 3** illustre schématiquement un algorithme de décision de déclenchement d'une procédure d'alignement de canaux primaires, l'algorithme étant implémenté par le premier point d'accès AP1 111.

Dans une étape 301, le premier point d'accès AP1 111 détecte qu'un trafic de données sensibles au temps-réel est établi entre la station STA1 131 et ledit premier point d'accès AP1 111 (quel que soit le sens de ce trafic). Par exemple, le point d'accès AP1 111 détermine que ledit trafic est sensible au temps-réel en fonction d'une information de qualité de service QoS contenue dans un champ TID (« Traffic Identifier » en anglais) défini dans les entêtes IEEE 802.11. D'autres champs peuvent servir à identifier le type de trafic dans d'autres technologies WLAN reposant sur un accès au médium par procédure de type CSMA/CA telle que précédemment décrite.

Dans une étape 302, le premier point d'accès AP1 111 effectue des mesures de qualité de transmission dudit trafic de données sensibles au temps-réel. Par exemple, le premier point d'accès AP1 111 s'appuie sur la quantité de retransmissions par rapport à la quantité d'acquittements survenant au niveau de la couche MAC (« Médium Access Control » en anglais).

Dans une étape 303, le premier point d'accès AP1 111 vérifie si la qualité de transmission est satisfaisante pour ledit trafic de données sensibles au temps-réel. Si la qualité de transmission est dégradée en-deçà d'un seuil prédéfini (*e.g.* un taux de retransmissions supérieur à un seuil prédéfini pendant une durée prédéfinie), ce qui signifie que la qualité de transmission pour ledit trafic de données sensibles au temps-réel n'est pas satisfaisante avec le schéma de modulation et de codage MCS (« Modulation and Coding Scheme » en anglais) et le nombre de flux spatiaux (« Spatial Stream » en anglais) utilisés, une étape 304 est effectuée ; sinon, l'étape 302 est répétée, avec éventuellement une période prédéfinie d'attente.

Dans l'étape 304, le premier point d'accès AP1 111 effectue un repli dynamique de bande, c'est-à-dire que le premier point d'accès AP1 111 va tenter de réduire la quantité de ses canaux secondaires, jusqu'à éventuellement ne conserver que le canal primaire si celui-ci suffit à la transmission du trafic de données sensibles au temps-réel.

Dans une étape 305, le premier point d'accès AP1 111 continue d'effectuer des mesures de qualité de transmission dudit trafic de données sensibles au temps-réel.

Dans une étape 306, le premier point d'accès AP1 111 vérifie si la qualité de transmission est satisfaisante pour ledit trafic de données sensibles au temps-réel suite au repli dynamique de bande. Si la qualité de transmission se dégrade en-deçà d'un seuil prédéfini (*e.g.* un taux de retransmissions supérieur à un seuil prédéfini pendant une durée prédéfinie), ce qui signifie que la qualité de transmission pour ledit trafic de données sensibles au temps-réel n'est pas satisfaisante, une étape 307 est effectuée ; sinon, l'étape 305 est répétée, avec éventuellement une période prédéfinie d'attente.

Dans l'étape 307, le premier point d'accès AP1 111 déclenche la procédure d'alignement de canaux primaires. Le premier point d'accès AP1 111 notifie l'unité de décision DMU 100 du besoin d'alignement de canaux primaires. Le premier point d'accès AP1 111 informe l'unité de décision DMU 100 du canal primaire utilisé par ledit premier point d'accès AP1 111, ainsi que de la qualité de service QoS du trafic de données sensibles au temps-réel concerné.

La **Fig. 4** illustre schématiquement un algorithme de collecte de données de balayage effectué par la station STA1 131, l'algorithme étant implémenté par le premier point d'accès AP1 111. L'algorithme de la Fig. 4 peut être déclenché par le premier point d'accès AP1 111 de son propre chef suite à l'étape 307, ou sur instruction de l'unité de décision DMU 100 après notification du besoin d'alignement de canaux primaires, dans la mesure où la station STA 131 le supporte.

Dans une étape 401, le premier point d'accès AP1 111 envoie à la station STA 131 une demande de balayage. La demande de balayage requiert à la station STA 131 de retourner un rapport de balayage listant les réseaux locaux sans-fil WLAN à portée radio de la station STA 131, ainsi que les canaux occupés par ces réseaux locaux sans-fil WLAN. Il est possible d'utiliser des trames de demande de mesure de balises, telles que définies dans l'amendement IEEE 802.11k, qui permettent à une station STA de renvoyer au point d'accès AP auquel ladite station STA est connectée quels sont les autres réseaux locaux sans-fil WLAN que ladite station STA détecte, avec une indication du canal primaire indiqué, ainsi que le niveau de champ RSSI (« Received Signal Strength Indicator » en anglais) associé. Les balises émises par les points d'accès AP gérant ces réseaux locaux sans-fil WLAN peuvent être utilisées.

Dans un mode de réalisation particulier, la station STA 131 enrichit le rapport de balayage en indiquant, par canal, un identifiant du réseau local sans-fil WLAN qui occupe la plus grande partie du temps sur une fenêtre d'observation de durée prédéfinie (trafic dominant). Dans les réseaux locaux sans-fil WLAN de type Wi-Fi, l'identifiant du réseau local sans-fil WLAN est une information BSSID (« Basic Service Set Identifier » en anglais) disponible dans les entêtes MAC de toute transmission de données. De plus, la station STA 131 enrichit le rapport de balayage en indiquant la qualité de service QoS du trafic dominant sur le canal concerné. En effet, une observation de la transmission qui occupe le plus un canal permet de déterminer la qualité de service QoS du trafic dominant concerné, soit par analyse de temps séparant chaque trame de ladite transmission et une corrélation avec des valeurs moyennes de chaque classe de trafic possible, soit par décodage du champ TID (tel que précédemment décrit).

Dans une étape 402, le premier point d'accès AP1 111 reçoit, en provenance de la station STA 131, le rapport de balayage demandé à l'étape 401.

Dans une étape 403, le premier point d'accès AP1 111 notifie, à l'unité de décision DMU 100, le rapport de balayage reçu à l'étape 402. L'unité de décision DMU 100 a ainsi connaissance des réseaux locaux sans-fil WLAN susceptibles de perturber la transmission du trafic de données sensibles au temps-réel en question.

En variante de réalisation, le premier point d'accès AP1 111 demande à ce que la station STA 131 lui envoie périodiquement de tels rapports de balayage, de sorte à disposer des informations requises en cas de besoin d'alignement de canaux primaires.

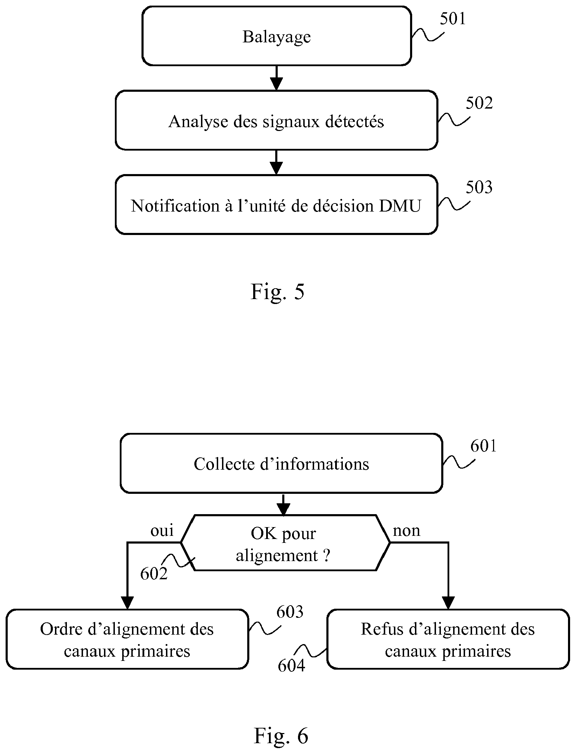

La **Fig. 5** illustre schématiquement un algorithme de collecte de données de balayage effectué par le premier point d'accès AP1 111. L'algorithme de la Fig. 5 est déclenché en complément de celui de la Fig. 4, et est particulièrement utile lorsque le premier point d'accès AP1 111 n'a pas réussi à obtenir de rapport de balayage par la station STA 131, soit parce que la station STA 131 n'implémente pas de mécanisme de génération de tels rapports de balayage, soit parce que la station STA 131 n'a pas réussi à transmettre (faute de conditions radio propices) de rapport de balayage au premier point d'accès AP1 111.

Dans une étape 501, le premier point d'accès AP1 111 effectue un balayage de ses canaux secondaires, afin de détecter des transmissions effectuées sur lesdits canaux.

Dans une étape 502, le premier point d'accès AP1 111 analyse les signaux radio détectés pendant le balayage de l'étape 501. Le premier point d'accès AP1 111 liste ainsi les réseaux locaux sans-fil WLAN à portée radio dudit premier point d'accès AP1 111, ainsi que les canaux occupés par ces réseaux locaux sans-fil WLAN.

Dans un mode de réalisation particulier, le premier point d'accès AP1 111 détermine, par canal, un identifiant du réseau local sans-fil WLAN qui occupe la plus grande partie du temps sur une fenêtre d'observation de durée prédéfinie (trafic dominant). Le premier point d'accès AP1 111 détermine en outre la qualité de service QoS du trafic dominant sur le canal concerné, soit par analyse de temps séparant chaque trame dudit trafic dominant et une corrélation avec des valeurs moyennes de chaque classe de trafic possible, soit par décodage du champ TID (tel que précédemment décrit).

Dans une étape 503, le premier point d'accès AP1 111 génère un rapport de balayage (comme l'aurait fait la station STA 131) et le notifie à l'unité de décision DMU 100. L'unité de décision DMU 100 a ainsi une estimation des réseaux locaux sans-fil WLAN susceptibles de perturber la transmission du trafic de données sensibles au temps-réel en question.

La **Fig. 6** illustre schématiquement un algorithme de décision d'alignement ou pas de canaux primaires, l'algorithme étant implémenté par l'unité de décision DMU 100.

Dans une étape 601, l'unité de décision DMU 100 collecte des informations relatives au besoin d'alignement de canaux primaires notifié par le premier point d'accès AP1 111 à l'étape 307.

Lorsque l'unité de décision DMU 100 est connectée au(x) second(s) point(s) d'accès AP2 112 (Fig. 1B ou 1D), l'unité de décision DMU 100 a la possibilité d'être informée des canaux primaires utilisés par les points d'accès AP qui lui sont connectés, ainsi que du type des trafics dominants (sensibles ou pas au temps-réel) dans lesquels lesdits points d'accès AP sont impliqués, et de la qualité de service QoS desdits trafics. En étant notifiée du rapport de balayage effectué par la station STA1 131 (étape 403) et/ou du rapport de balayage effectué par le premier point d'accès AP1 111 (étape 503), l'unité de décision DMU 100 détermine chaque second point d'accès AP2 112 susceptible d'interférer avec le trafic de données sensibles au temps-réel concerné par le besoin d'alignement de canaux primaires notifié par le premier point d'accès AP1 111 à l'étape 307. L'unité de décision DMU 100 détermine alors, pour chaque second point d'accès AP2 112 susceptible d'interférer, quelle est la qualité de service QoS du trafic dominant d'après les informations reçues dudit second point d'accès AP2 112.

Lorsque l'unité de décision DMU 100 n'est pas connectée au(x) second(s) point(s) d'accès AP2 112 (Fig. 1A ou 1C), l'unité de décision DMU 100 s'appuie uniquement sur le rapport de balayage effectué par la station STA1 131 (notifié à l'étape 403) et/ou du rapport de balayage effectué par le premier point d'accès AP1 111 (notifié à l'étape 503). Ces rapports de balayage doivent alors avoir été enrichis par l'information de qualité de service QoS de trafic dominant. Ces rapports de balayage sont alors utilisés par l'unité de décision DMU 100 pour déterminer, d'une part, chaque second point d'accès AP2 112 susceptible d'interférer avec le trafic de données sensibles au temps-réel concerné par le besoin d'alignement de canaux primaires notifié par le premier point d'accès AP1 111 à l'étape 307, et d'autre part, quel est son canal primaire et la qualité de service QoS de son trafic dominant.

Dans les deux cas précédents, l'unité de décision DMU 100 retient ensuite uniquement chaque second point d'accès AP2 susceptible d'interférer, dont la qualité de service QoS de trafic dominant est inférieure à celle du trafic de données sensibles au temps-réel concerné par le besoin d'alignement de canaux primaires notifié par le premier point d'accès AP1 111 à l'étape 307. S'il n'en reste qu'un, l'unité de décision DMU 100 instruit le premier point d'accès AP1 111 d'utiliser tel canal comme canal primaire, en lui indiquant le canal primaire utilisé par le second point d'accès AP2 restant. S'il n'en reste aucun, l'unité de décision DMU 100 communique au premier point d'accès AP1 111 un refus d'alignement de canaux primaires. S'il en reste plus d'un, l'unité de décision DMU 100 instruit le premier point d'accès AP1 111 d'effectuer une procédure de découverte itérative sur les canaux primaires utilisés par les seconds points d'accès AP2 restants. La procédure de découverte itérative est détaillée ci-après en relation avec la Fig. 7. L'unité de décision DMU 100 indique au premier point d'accès AP1 111 quels sont les canaux sur lesquels la procédure de découverte itérative doit s'opérer, ou de manière équivalente, quels sont les canaux sur lesquels la procédure de découverte itérative ne doit pas s'opérer. L'unité de décision DMU 100 s'assure ainsi que le premier point d'accès AP1 111 ne va pas venir aligner son canal primaire sur celui d'un second point d'accès AP2 112 dont le trafic dominant est de qualité de service QoS supérieure à celle du trafic de données sensibles au temps-réel concerné par le besoin d'alignement de canaux primaires notifié par le premier point d'accès AP1 111 à l'étape 307.

Ainsi, dans une étape 602, l'unité de décision DMU 100 vérifie si, d'après les informations collectées, un alignement de canaux primaires est possible, au vu des qualités de service QoS des trafics concernés. Si tel est le cas, une étape 603 est effectuée ; sinon, une étape 604 est effectuée.

Dans l'étape 603, l'unité de décision DMU 100 instruit le premier point d'accès AP1 111 d'effectuer un alignement de canaux primaires. Comme indiqué ci-dessus, soit l'unité de décision DMU 100 fournit l'information de canal primaire à utiliser par le premier point d'accès AP1 111, soit l'unité de décision DMU 100 demande l'exécution de la procédure de découverte itérative.

Dans l'étape 604, l'unité de décision DMU 100 communique au premier point d'accès AP1 111 un refus d'alignement de canaux primaires.

La **Fig. 7** illustre schématiquement un algorithme de découverte itérative de canal primaire à sélectionner, l'algorithme étant effectué par le premier point d'accès AP1 111. Dans la procédure de découverte itérative, le premier point d'accès AP1 111 teste des canaux primaires possibles en surveillant la qualité du trafic de données sensibles au temps-réel pour déterminer quel canal primaire est approprié.

Dans une étape 701, le premier point d'accès AP1 111 reçoit, en provenance de l'unité de décision DMU 100, un ordre de déclenchement de procédure de découverte itérative. L'ordre indique au premier point d'accès AP1 111 quels sont les canaux sur lesquels la procédure de découverte itérative doit s'opérer, ou de manière équivalente, quels sont les canaux sur lesquels la procédure de découverte itérative ne doit pas s'opérer.

Dans une étape 702, le premier point d'accès AP1 111 sélectionne comme canal primaire un des canaux sur lesquels la procédure de découverte itérative peut s'opérer d'après l'ordre reçu à l'étape 701.

Dans une étape 703, le premier point d'accès AP1 111 effectue des mesures de qualité de transmission du trafic de données sensibles au temps-réel, comme dans l'étape 302.

Dans une étape 704, le premier point d'accès AP1 111 vérifie si la qualité de transmission est satisfaisante pour ledit trafic de données sensibles au temps-réel, comme dans l'étape 303. Si la qualité de transmission pour ledit trafic de données sensibles au temps-réel est satisfaisante, une étape 705 est effectuée ; sinon, l'étape 702 est répétée en sélectionnant comme canal primaire un autre canal parmi les canaux sur lesquels la procédure de découverte itérative peut s'opérer d'après l'ordre reçu à l'étape 701. Si tous les canaux sur lesquels la procédure de découverte itérative peut s'opérer d'après l'ordre reçu à l'étape 701 ont été testés sans succès, notification en est faite à l'unité de décision DMU 100. Le premier point d'accès AP 111 conserve alors le canal primaire d'origine.

Dans l'étape 705, le premier point d'accès AP1 111 notifie à l'unité de décision DMU 100 quel canal primaire a finalement été sélectionné. Au vu de la manière dont l'unité de décision DMU 100 a établi l'ordre reçu à l'étape 701, le canal primaire du premier point d'accès AP1 111 est désormais le même que celui du second point d'accès AP2 112 qui créait l'interférence sur le trafic de données sensibles au temps-réel.

A noter que c'est l'unité de décision DMU 100 qui choisit le canal primaire du premier point d'accès AP 111, et de tous les points d'accès AP qui lui sont connectés. Cependant, l'unité de décision DMU 100 le fait sur une large échelle de temps de manière générale. Ce n'est qu'en cas de détection d'interférence sur le canal primaire utilisé par le premier point d'accès AP 111 en présence d'un trafic sensible au temps-réel, que le premier point d'accès AP 111 notifie l'unité de décision DMU 100 pour qu'elle choisisse un nouveau canal primaire (pour ledit premier point d'accès AP 111 ou pour un autre point d'accès AP, interférant, qui lui est connecté). Ceci permet de gérer le cas de déploiement en nuage (« cloud » en anglais) ou, d'une manière générale, de l'unité de décision DMU 100 agissant comme un contrôleur externe.

La **Fig. 8** illustre schématiquement un algorithme d'alignement de canaux primaires, l'algorithme étant effectué par l'unité de décision DMU 100, selon une autre approche de l'invention. Cette autre approche est adaptée à un déploiement où plusieurs points d'accès AP sont gérés par une même unité de décision DMU (comme illustré sur la Fig. 1B ou 1D).

L'unité de décision DMU 100 a connaissance que le premier point d'accès AP1 111 est destiné à supporter un service de transmission de données sensibles au temps-réel (indépendamment du fait que ce service soit activé ou non).

Tous les points d'accès AP connectés à l'unité de décision DMU 100 sont configurés pour effectuer un balayage, tel que précédemment décrit, et indiquer à la l'unité de décision DMU 100 chaque point d'accès AP qui est à portée radio, en outre avec une information indiquant avec quel niveau de puissance ledit point d'accès AP à portée radio est détecté. Bien que cela ne soit pas nécessaire, les points d'accès AP peuvent fournir une information indiquant quel canal primaire est utilisé par chaque point d'accès AP à portée radio. En effet, l'unité de décision DMU 100 a déjà la possibilité de connaître cette information, puisque chaque point d'accès AP considéré ici lui est connecté.

Dans une étape 801, l'unité de décision DMU 100 collecte ainsi les informations relatives à des rapports de balayages effectués par les points d'accès AP qui lui sont connectés.

Dans une étape 802, l'unité de décision DMU 100 crée une liste L de tous les seconds points d'accès AP2 112 qui détectent le premier point d'accès AP1 111 avec un niveau de puissance supérieur à un seuil TH prédéfini.

Dans une étape 802, l'unité de décision DMU 100 instruit tous les seconds points d'accès AP2 112 de la liste L d'utiliser, comme canal primaire, le même canal que le canal primaire du premier point d'accès AP1 111.

A chaque changement de canal primaire du premier point d'accès AP1 111, le premier point d'accès AP1 111 informe l'unité de décision DMU 100 du canal primaire nouvellement sélectionné. L'unité de décision DMU 100 instruit tous les seconds points d'accès AP2 112 de la liste L d'utiliser, comme canal primaire, le canal primaire nouvellement sélectionné par le premier point d'accès AP1 111. Les risques de perturbation du trafic de données sensibles au temps-réel supporté par le premier point d'accès AP1 111, considéré comme étant de qualité de service QoS supérieure ou égale à toute qualité de service de transmissions impliquant chaque second point d'accès AP2 112 dans son second réseau local sans-fil WLAN2 122 respectif, sont ainsi limités.

La liste L est mise à jour, par réexécution de l'algorithme de la Fig. 8, à chaque nouveau second point d'accès AP2 112 connecté à l'unité de décision DMU 100.

Dans un mode de réalisation particulier, le premier point d'accès AP1 111 peut, de lui-même, changer de canal primaire, notamment pour des raisons de détection de radar, qui doivent se faire immédiatement. Dans ces conditions, le premier point d'accès AP1 111 change de canal primaire et le notifie à l'unité de décision DMU 100. Ce changement de canal primaire pour des raisons de détection de radar est supposé être temporaire. L'unité de décision DMU 100 répercute alors ce changement sur les point d'accès AP présents dans la liste L associée au premier point d'accès AP1 111, si leurs canaux primaires sont alignés, et ce, pour les maintenir aligner.

## Revendications

1. Procédé de sélection de canal primaire de communication dans un système de communication sans-fil comportant un premier point d'accès (111) gérant un premier réseau local sans-fil (121) et au moins un second point d'accès (112) gérant au moins un second réseau local sans-fil (122) respectif, les transmissions dans les premier (121) et second(s) (122) réseaux locaux sans-fil étant effectuées selon une procédure de type CSMA/CA,
chaque point d'accès parmi les premier (111) et second(s) (122) points d'accès implémentant un mécanisme de détection d'énergie et un mécanisme de détection de préambule dans le cadre de la procédure CSMA/CA, le mécanisme de détection d'énergie étant implémenté pour accéder au canal primaire de communication et pour accéder à chaque canal secondaire de communication associé au canal primaire de communication, le mécanisme de détection de préambule étant implémenté pour accéder au canal primaire de communication et éventuellement pour accéder à chaque canal secondaire de communication associé au canal primaire de communication,
**caractérisé en ce qu'**une unité de décision (100) instruit (603) que le premier point d'accès (111) et chaque second point d'accès (112) utilisent le même canal primaire de communication, lorsque le premier point d'accès (111) communique avec une station (131) dans le cadre d'une transmission de données sensibles au temps-réel de qualité de service supérieure ou égale à toute qualité de service de transmissions impliquant chaque second point d'accès (112) dans son second réseau local sans-fil (122).

2. Procédé selon la revendication 1, **caractérisé en ce que** le premier point d'accès (111) surveille (302, 305) la qualité de ladite transmission de données sensibles au temps-réel, et déclenche (307) une procédure d'alignement de canaux primaires auprès de l'unité de décision (100) lorsque la qualité de ladite transmission de données sensibles au temps-réel baisse en dessous d'un seuil prédéfini.

3. Procédé selon la revendication 2, **caractérisé en ce que**, avant de déclencher (307) la procédure d'alignement de canaux primaires auprès de l'unité de décision, le premier point d'accès effectue (304) un repli dynamique de bande et continue de surveiller (305) la qualité de ladite transmission de données sensibles au temps-réel.

4. Procédé selon l'une quelconque des revendications 1 à 3, **caractérisé en ce que** le premier point d'accès (111) envoie (401) à la station (131) une demande de balayage requérant de retourner un premier rapport de balayage listant les réseaux locaux sans-fil à portée radio de ladite station (131), ainsi que les canaux occupés par lesdits réseaux locaux sans-fil à portée radio de ladite station (131), **en ce que** le premier point d'accès (111) notifie (403) le premier rapport de balayage à l'unité de décision (100), et **en ce que** l'unité de décision (100) utilise ledit premier rapport de balayage pour déterminer quel second réseau local sans-fil ou quels seconds réseaux locaux sans-fil sont susceptibles d'interférer avec ladite transmission de données sensibles au temps-réel.

5. Procédé selon la revendication 4, **caractérisé en ce que** le premier rapport de balayage fournit une information de qualité de service d'un trafic de données dominant sur chaque réseau local sans-fil à portée radio de ladite station (131).

6. Procédé selon l'une quelconque des revendications 1 à 5, **caractérisé en ce que** le premier point d'accès (111) effectue un balayage (501) de ses canaux secondaires de communication et liste les réseaux locaux sans-fil à portée radio dudit premier point d'accès (111) dans un second rapport de balayage, **en ce que** le premier point d'accès (111) notifie (503) le second rapport de balayage à l'unité de décision (100), et **en ce que** l'unité de décision (100) utilise ledit second rapport de balayage pour déterminer quel second réseau local sans-fil ou quels seconds réseaux locaux sans-fil sont susceptibles d'interférer avec ladite transmission de données sensibles au temps-réel.

7. Procédé selon la revendication 6, **caractérisé en ce que** le second rapport de balayage fournit une information de qualité de service d'un trafic de données dominant sur chaque réseau local sans-fil à portée radio dudit premier point d'accès (111).

8. Procédé selon l'une quelconque des revendications 1 à 7, **caractérisé en ce que**, lorsque l'unité de décision (100) détermine que plusieurs seconds réseaux locaux sans-fil sont susceptibles d'interférer avec ladite transmission de données sensibles au temps-réel, l'unité de décision (100) requiert au premier point d'accès d'effectuer une procédure de découverte itérative de canal primaire dans laquelle le premier point d'accès (111) teste des canaux primaires de communication possibles en surveillant la qualité de ladite transmission de données sensibles au temps-réel pour déterminer quel canal primaire de communication est approprié.

9. Procédé selon la revendication 1, **caractérisé en ce que** l'unité de décision (100) collecte (801) des rapports de balayage fournis par tous les points d'accès qui lui sont connectés, l'unité de décision (100) crée une liste L de tous les seconds points d'accès (112) qui détectent le premier point d'accès (111) avec un niveau de puissance supérieur à un seuil prédéfini, l'unité de décision (100) instruit (803) tous les seconds points d'accès (112) de la liste L d'utiliser comme canal primaire de communication le même canal que le canal primaire de communication du premier point d'accès (111), et **en ce qu'**à chaque changement de canal primaire de communication du premier point d'accès (111), le premier point d'accès (111) informe l'unité de décision (100) du canal primaire de communication nouvellement sélectionné, et l'unité de décision (100) instruit tous les seconds points d'accès (112) de la liste L d'utiliser, comme canal primaire de communication, le canal primaire de communication nouvellement sélectionné par le premier point d'accès (111).

10. Procédé selon l'une quelconque des revendications 1 à 9, dans lequel les premier et second(s) réseaux locaux sans-fil sont de type Wi-Fi.

11. Produit programme d'ordinateur, comprenant des instructions pour implémenter, par un processeur (200), le procédé selon la revendication 1, lorsque ledit programme est exécuté par ledit processeur (200).

12. Support de stockage d'informations, stockant un programme d'ordinateur comprenant des instructions pour implémenter, par un processeur (200), le procédé selon la revendication 1, lorsque ledit programme est exécuté par ledit processeur (200).

13. Unité de décision (100) configurée pour effectuer une sélection de canal primaire de communication dans un système de communication sans-fil comportant un premier point d'accès (111) gérant un premier réseau local sans-fil (121) et au moins un second point d'accès (112) gérant au moins un second réseau local sans-fil (122) respectif, les transmissions dans les premier (121) et second(s) (122) réseaux locaux sans-fil étant effectuées selon une procédure de type CSMA/CA,
chaque point d'accès parmi les premier (111) et second(s) (112) points d'accès implémentant un mécanisme de détection d'énergie et un mécanisme de détection de préambule dans le cadre de la procédure CSMA/CA, le mécanisme de détection d'énergie étant implémenté pour accéder au canal primaire de communication et pour accéder à chaque canal secondaire de communication associé au canal primaire de communication, le mécanisme de détection de préambule étant implémenté pour accéder au canal primaire de communication et éventuellement pour accéder à chaque canal secondaire de communication associé au canal primaire de communication,
**caractérisé en ce que** l'unité de décision (100) comporte des moyens pour instruire (603) que le premier point d'accès (111) et chaque second point d'accès (112) utilisent le même canal primaire de communication, lorsque le premier point d'accès communique avec une station (131) dans le cadre d'une transmission de données sensibles au temps-réel de qualité de service supérieure ou égale à toute qualité de service de transmissions impliquant chaque second point d'accès (112) dans son second réseau local sans-fil (122).

## Patentansprüche

1. Verfahren zur Auswahl eines primären Kommunikationskanals in einem drahtlosen Kommunikationssystem, das einen ersten Zugangspunkt (111), der ein erstes drahtloses lokales Netzwerk (121) verwaltet, und mindestens einen zweiten Zugangspunkt (112) aufweist, der mindestens ein zweites drahtloses lokales Netzwerk (122) verwaltet, wobei die Übertragungen in den ersten (121) und zweiten (122) drahtlosen lokalen Netzwerken gemäß einer Prozedur vom Typ CSMA/CA ausgeführt werden,
wobei jeder Zugangspunkt unter den ersten (111) und zweiten (122) Zugangspunkten einen Energieerfassungsmechanismus und einen Präambelerfassungsmechanismus im Rahmen der CSMA/CA-Prozedur implementiert, wobei der Energieerfassungsmechanismus implementiert wird, um auf den primären Kommunikationskanal zuzugreifen und um auf jeden dem primären Kommunikationskanal zugeordneten sekundären Kommunikationskanal zuzugreifen, wobei der Präambelerfassungsmechanismus implementiert wird, um auf den primären Kommunikationskanal zuzugreifen und ggf. auf jeden dem primären Kommunikationskanal zugeordneten sekundären Kommunikationskanal zuzugreifen, **dadurch gekennzeichnet, dass** eine Entscheidungseinheit (100) anweist (603), dass der erste Zugangspunkt (111) und jeder zweite Zugangspunkt (112) den gleichen primären Kommunikationskanal verwenden, wenn der erste Zugangspunkt (111) mit einer Station (131) im Rahmen einer Übertragung von empfindlichen Daten in Echtzeit einer Dienstqualität höher als jede oder gleich jeder Dienstqualität von Übertragungen kommuniziert, die jeden zweiten Zugangspunkt (112) in seinem zweiten drahtlosen lokalen Netzwerk (122) implizieren.

2. Verfahren nach Anspruch 1, **dadurch gekennzeichnet, dass** der erste Zugangspunkt (111) die Qualität der Übertragung von empfindlichen Daten in Echtzeit überwacht (302, 305) und eine Abgleichungsprozedur von Primärkanälen bei der Entscheidungseinheit (100) auslöst (307), wenn die Qualität der Übertragung von empfindlichen Daten in Echtzeit unter eine vordefinierte Schwelle sinkt.

3. Verfahren nach Anspruch 2, **dadurch gekennzeichnet, dass** vor dem Auslösen (307) der Abgleichungsprozedur von Primärkanälen bei der Entscheidungseinheit der erste Zugangspunkt ein dynamisches Band-Backoff ausführt (304) und fortfährt, die Qualität der Übertragung von empfindlichen Daten in Echtzeit zu überwachen (305).

4. Verfahren nach einem der Ansprüche 1 bis 3, **dadurch gekennzeichnet, dass** der erste Zugangspunkt (111) eine Abtastanforderung an die Station (131) schickt (401), die verlangt, eine erste Abtastmeldung zurückzuschicken, die die drahtlosen lokalen Netzwerke in Funkreichweite der Station (131) sowie die von den drahtlosen lokalen Netzwerken in Funkreichweite der Station (131) besetzten Kanäle auflistet, dass der erste Zugangspunkt (111) der Entscheidungseinheit (100) die erste Abtastmeldung mitteilt (403), und dass die Entscheidungseinheit (100) die erste Abtastmeldung verwendet, um zu bestimmen, welches zweite drahtlose lokale Netzwerk oder welche zweiten drahtlosen lokalen Netzwerke mit der Übertragung sensibler Daten in Echtzeit interferieren können.

5. Verfahren nach Anspruch 4, **dadurch gekennzeichnet, dass** die erste Abtastmeldung eine Dienstqualitätsinformation eines Datenverkehrs liefert, der auf jedem drahtlosen lokalen Netzwerk in Funkreichweite der Station (131) dominiert.

6. Verfahren nach einem der Ansprüche 1 bis 5, **dadurch gekennzeichnet, dass** der erste Zugangspunkt (111) eine Abtastung (501) seiner sekundären Kommunikationskanäle ausführt und die drahtlosen lokalen Netzwerke in Funkreichweite des ersten Zugangspunkts (111) in einer zweiten Abtastmeldung auflistet, dass der erste Zugangspunkt (111) die zweite Abtastmeldung der Entscheidungseinheit (100) mitteilt (503), und dass die Entscheidungseinheit (100) die zweite Abtastmeldung verwendet, um zu bestimmen, welches zweite drahtlose lokale Netzwerk oder welche zweiten drahtlosen lokalen Netzwerke mit der Übertragung sensibler Daten in Echtzeit interferieren können.

7. Verfahren nach Anspruch 6, **dadurch gekennzeichnet, dass** die zweite Abtastmeldung eine Dienstqualitätsinformation eines Datenverkehrs liefert, der auf jedem drahtlosen lokalen Netzwerk in Funkreichweite des ersten Zugangspunkts (111) dominiert.

8. Verfahren nach einem der Ansprüche 1 bis 7, **dadurch gekennzeichnet, dass**, wenn die Entscheidungseinheit (100) bestimmt, dass mehrere zweite drahtlose lokale Netzwerke mit der Übertragung sensibler Daten in Echtzeit interferieren können, die Entscheidungseinheit (100) vom ersten Zugangspunkt fordert, eine iterative Primärkanal-Entdeckungsprozedur durchzuführen, bei der der Zugangspunkt (111) mögliche primäre Kommunikationskanäle testet, indem er die Qualität der Übertragung sensibler Daten in Echtzeit überwacht, um zu bestimmen, welcher primäre Kommunikationskanal geeignet ist.

9. Verfahren nach Anspruch 1, **dadurch gekennzeichnet, dass** die Entscheidungseinheit (100) Abtastmeldungen sammelt (801), die von allen Zugangspunkten geliefert werden, die mit ihr verbunden sind, die Entscheidungseinheit (100) eine Liste L aller zweiten Zugangspunkte (112) erzeugt, die den ersten Zugangspunkt (111) mit einem Leistungspegel höher als eine vordefinierte Schwelle erfassen, die Entscheidungseinheit (100) alle zweiten Zugangspunkte (112) der Liste L anweist (803), als primären Kommunikationskanal den gleichen Kanal wie der primäre Kommunikationskanal des ersten Zugangspunkts (111) zu verwenden, und dass bei jeder Änderung des primären Kommunikationskanals des ersten Zugangspunkts (111) der erste Zugangspunkt (111) die Entscheidungseinheit (100) über den neu gewählten primären Kommunikationskanal informiert, und die Entscheidungseinheit (100) alle zweiten Zugangspunkte (112) der Liste L anweist, als primären Kommunikationskanal den neu vom ersten Zugangspunkt (111) ausgewählten primären Kommunikationskanal zu verwenden.

10. Verfahren nach einem der Ansprüche 1 bis 9, wobei die ersten und zweiten drahtlosen lokalen Netzwerke vom Typ WiFi sind.

11. Computerprogrammprodukt, das Anweisungen enthält, um das Verfahren nach Anspruch 1 durch einen Prozessor (200) zu implementieren, wenn das Programm vom Prozessor (200) ausgeführt wird.

12. Datenspeicherträger, der ein Computerprogramm speichert, das Anweisungen enthält, das Verfahren nach Anspruch 1 durch einen Prozessor (200) zu implementieren, wenn das Programm vom Prozessor (200) ausgeführt wird.

13. Entscheidungseinheit (100), die konfiguriert ist, eine Auswahl eines primären Kommunikationskanals in einem drahtlosen Kommunikationssystem auszuführen, das einen ersten Zugangspunkt (111), der ein erstes drahtloses lokales Netzwerk (121) verwaltet, und mindestens einen zweiten Zugangspunkt (112) aufweist, der mindestens ein zweites drahtloses lokales Netzwerk (122) verwaltet, wobei die Übertragungen in den ersten (121) und zweiten (122) drahtlosen lokalen Netzwerken gemäß einer Prozedur des Typs CSMA/CA ausgeführt werden,
wobei jeder Zugangspunkt unter den ersten (111) und zweiten (122) Zugangspunkten einen Energieerfassungsmechanismus und einen Präambelerfassungsmechanismus im Rahmen der CSMA/CA-Prozedur implementiert, wobei der Energieerfassungsmechanismus implementiert wird, um auf den primären Kommunikationskanal zuzugreifen und um auf jeden dem primären Kommunikationskanal zugeordneten sekundären Kommunikationskanal zuzugreifen, wobei der Präambelerfassungsmechanismus implementiert wird, um auf den primären Kommunikationskanal zuzugreifen und ggf. auf jeden dem primären Kommunikationskanal zugeordneten sekundären Kommunikationskanal zuzugreifen, **dadurch gekennzeichnet, dass** die Entscheidungseinheit (100) Einrichtungen aufweist, um anzuweisen (603), dass der erste Zugangspunkt (111) und jeder zweite Zugangspunkt (112) den gleichen primären Kommunikationskanal verwenden, wenn der erste Zugangspunkt mit einer Station (131) im Rahmen einer Übertragung von empfindlichen Daten in Echtzeit einer Dienstqualität höher als jede oder gleich jeder Dienstqualität von Übertragungen kommuniziert, die jeden zweiten Zugangspunkt (112) in seinem zweiten drahtlosen lokalen Netzwerk (122) implizieren.

## Claims

1. Method for selecting a primary communication channel in a wireless communication system comprising a first access point (111) managing a first wireless local area network (121) and at least one second access point (112) managing at least one respective second wireless local area network (122), the transmissions in the first (121) and second (122) wireless local area networks being performed in accordance with a procedure of the CSMA/CA type,
each access point among the first (111) and second (122) access points implementing an energy detection mechanism and a preamble detection mechanism in the context of the CSMA/CA procedure, the energy detection mechanism being implemented for accessing the primary communication channel and for accessing each secondary communication channel associated with the primary communication channel, the preamble detection mechanism being implemented for accessing the primary communication channel and optionally for accessing each secondary communication channel associated with the primary communication channel,
**characterised in that** that a decision making unit (100) instructs (603) the first access point (111) and each second access point (112) to use the same primary communication channel, when the first access point (111) communicates with a station (131) in the context of a transmission of real-time sensitive data with a quality of service superior to or equal to any quality of service of transmissions involving each second access point (112) in the second wireless local area network (122) thereof.

2. Method according to claim 1, **characterised in that** the first access point (111) monitors (302, 305) the quality of said transmission of real-time sensitive data, and triggers (307) a primary-channel alignment procedure with the decision making unit (100) when the quality of said transmission of real-time sensitive data drops below a predefined threshold.

3. Method according to claim 2, **characterised in that**, before triggering (307) the primary-channel alignment procedure with the decision making unit, the first access point performs (304) a dynamic band back-off and continues to monitor (305) the quality of said transmission of real-time sensitive data.

4. Method according to any one of claims 1 to 3, **characterised in that** the first access point (111) sends (401) to the station (131) a scanning request requiring feedback of a first scanning report listing the wireless local area networks within radio range of said station (131), as well as the channels occupied by said wireless local area networks within radio range of said station (131), **in that** the first access point (111) notifies (403) the first scanning report to the decision making unit (100), and **in that** the decision making unit (100) uses said first scanning report to determine which second wireless local area network or which second wireless local area networks are liable to interfere with said transmission of real-time sensitive data.

5. Method according to claim 4, **characterised in that** the first scanning report supplies information on quality of service of a dominant data traffic on each wireless local area network within radio range of said station (131).

6. Method according to any one of claims 1 to 5, **characterised in that** the first access point (111) performs a scanning (501) of the secondary communication channels thereof and lists the wireless local area networks within radio range of said first access point (111) in a second scanning report, **in that** the first access point (111) notifies (503) the second scanning report to the decision making unit (100), and **in that** the decision making unit (100) uses said second scanning report to determine which second wireless local area network or which second wireless local area networks are liable to interfere with said transmission of real-time sensitive data.

7. Method according to claim 6, **characterised in that** the second scanning report supplies information on quality of service of a dominant data traffic on each wireless local area network within radio range of said first access point (111).

8. Method according to any one of claims 1 to 7, **characterised in that**, when the decision making unit (100) determines that a plurality of second wireless local area networks are liable to interfere with said transmission of real-time sensitive data, the decision making unit (100) requires the first access point to perform an iterative primary-channel discovery procedure wherein the first access point (111) tests possible primary communication channels by monitoring the quality of said transmission of real-time sensitive data for determining which primary communication channel is appropriate.

9. Method according to claim 1, **characterised in that** the decision making unit (100) collects (801) scanning reports provided by all the access points that are connected thereto, the decision making unit (100) creates a list L of all the second access points (112) that detect the first access point (111) with a power level above a predefined threshold, the decision making unit (100) instructs (803) all the second access points (112) in the list L to use, as the primary communication channel, the same channel as the primary communication channel of the first access point (111), and **in that**, at each change of primary communication channel of the first access point (111), the first access point (111) informs the decision making unit (100) of the primary communication channel newly selected, and the decision making unit (100) instructs all the second access points (112) in the list L to use, as the primary communication channel, the primary communication channel newly selected by the first access point (111).

10. Method according to any one of claims 1 to 9, wherein the first and second wireless local area networks are of the Wi-Fi type.

11. Computer program product, comprising instructions for implementing, by a processor (200), the method according to claim 1, when said program is executed by said processor (200).

12. Information storage medium, storing a computer program comprising instructions for implementing, by a processor (200), the method according to claim 1, when said program is executed by said processor (200).

13. Decision making unit (100) configured to perform a primary communication channel selection in a wireless communication system comprising a first access point (111) managing a first wireless local area network (121) and at least one second access point (112) managing at least one respective second wireless local area network (122), the transmissions in the first (121) and second (122) wireless local area networks being performed in accordance with a procedure of the CSMA/CA type,
each access point among the first (111) and second (112) access points implementing an energy detection mechanism and a preamble detection mechanism in the context of the CSMA/CA procedure, the energy detection mechanism being implemented for accessing the primary communication channel and for accessing each secondary communication channel associated with the primary communication channel, the preamble detection mechanism being implemented for accessing the primary communication channel and optionally for accessing each secondary communication channel associated with the primary communication channel,
**characterised in that** the decision making unit (100) is such that it comprises means for instructing (603) the first access point (111) and each second access point (112) to use the same primary communication channel, when the first access point communicates with a station (131) in the context of a transmission of real-time sensitive data with a quality of service superior to or equal to any quality of service of transmissions involving each second access point (112) in the second wireless local area network (122) thereof.
